# EUROPEAN PATENT SPECIFICATION

(11) **EP 3 332 673 B1**
(45) Date of publication and mention of the grant of the patent: **23.03.2022**
(21) Application number: 17203482.9
(22) Date of filing: 24.11.2017
(51) Int. Cl.: A47F 3/04, E06B 3/66, F25D 23/02

(54) **HEAT INSULATION DOOR FOR A REFRIGERATION APPLIANCE**
WÄRMEDÄMMUNGSTÜR FÜR EIN KÄLTEGERÄT
PORTE D'ISOLATION THERMIQUE POUR UN APPAREIL FRIGORIFIQUE

(30) Priority: 12.12.2016 CN 201611138454
(43) Date of publication of application: 13.06.2018
(73) Proprietor: BSH Hausgeräte GmbH, 81739 München (DE)
(72) Inventor: Ding, Yuan, Wuxi, 214063 (CN); Lu, JingZuo, Gushi, 465200 (CN); Lv, Ping, Nanjing, 210000 (CN); Men, Defeng, Nanjing, 210046 (CN); Xu, Yaoguo, Nanjing, 210046 (CN); Zhang, Chuan, Chuzhou, 239016 (CN)

(56) References cited:
- CN-A- 105 823 294
- CN-U- 204 535 247

## Description

The present invention relates to the field of refrigeration, in particular to a refrigeration appliance and a heat insulation door thereof.

### Related Art

A door of a traditional refrigeration appliance (such as a refrigerator) is generally formed by foaming, and a user cannot see the interior of a refrigeration appliance from outside. The refrigeration appliance adopting a glass door provides the possibility for the user to observe the interior of a refrigeration space without opening the door. However, for a solution adopting a vacuum glass door, since a distance between two layers of glass in the vacuum glass door is very small, the colorful crystal process cannot be carried out, so that the appearance attractiveness is poor.

Documents CN 204535247 U and CN 105823294 A disclose a door for a refrigerator, wherein a door body comprises an inner transparent panel, an intermediate transparent panel and an outer transparent panel.

### SUMMARY

The present invention is disclosed in the independent claim 1. Further embodiments are disclosed in the dependent claims.

The present invention provides a heat insulation door for a refrigeration appliance, comprising a door body of a multilayer structure, wherein the door body comprises: a heat insulation vacuum glass module, wherein the vacuum glass module comprises superposed first glass and second glass having a first interval, and the first glass is located in front of the second glass along a front-to-rear direction of the door; and a front decoration plate located in front of the vacuum glass module to shield the first glass; and in a width and/or length direction of the first glass, the front decoration plate has a protruding portion that extends out of an edge of the vacuum glass module.

According to the invention, the door body further comprises a rear protective layer located behind the second glass along a front-to-rear direction and used for shielding the second glass. The rear protective layer is used for protecting the vacuum glass module at the back thereof and can be used as a decorative layer on the inner side of the heat insulation door.

In some embodiments, along the front-to-rear direction of the door, the protruding portion completely shields the doorframe, so that the doorframe is concealed behind the door, thereby improving the visual attractiveness of the front surface of the heat insulation door.

Optionally, a first sealing portion is disposed between an edge of the first glass and an edge of the second glass to enable the first interval to form an enclosed space.

Optionally, there is a second interval between the front decoration plate and the vacuum glass module.

Optionally, a second sealing portion is disposed between an edge of the front decoration plate and an edge of the vacuum glass module to enable the second interval to form an enclosed space.

Optionally, in a width and/or length direction of the first glass, the protruding portion of the front decoration plate extends out of the rear protective layer.

Optionally, there is a third interval between the rear protective layer and the vacuum glass module.

Optionally, a third sealing portion is disposed between an edge of the rear protective layer and an edge of the vacuum glass module to enable the third interval to form an enclosed space.

Optionally, the rear protective layer is bonded to the vacuum glass module.

Optionally, the rear protective layer comprises a protective film that adheres to the second glass.

Optionally, the heat insulation door further comprises a doorframe surrounding the vacuum glass module, wherein the doorframe comprises: a first cooperative wall located on a rear side of the protruding portion and connected to the protruding portion; a second cooperative wall located behind the first cooperative wall along the front-to-rear direction; a connecting wall connecting the first cooperative wall and the second cooperative wall; and along the front-to-rear direction, the vacuum glass module is located between the first cooperative wall and the second cooperative wall. As can be seen, along the front-to-rear direction, the vacuum glass module and the rear protective layer are located between the first cooperative wall and the second cooperative wall.

Optionally, the second cooperative wall is located behind the vacuum glass module along the front-to-rear direction, and the vacuum glass module is directly or indirectly connected to the second cooperative wall.

Optionally, the door body is provided with a sealing portion at the edges of two adjacent layer structures having an interval, and projections of the sealing portions are overlapped with each other along the front-to-rear direction.

Optionally, the second cooperative wall covers the sealing portion.

Optionally, the rear protective layer is a toughened glass plate, a glass plate, or a plastic plate.

Optionally, the front decoration plate is a colorful crystal glass plate.

Another objective of the present invention is to provide an improved refrigeration appliance, and the refrigeration appliance comprises the above heat insulation door according to one of the claims 1 to 14.

### BRIEF DESCRIPTION OF THE DRAWINGS

Fig. 1 is a three-dimensional structural schematic diagram of a refrigeration appliance according to an embodiment of the present invention.
Fig. 2 is a cross-section schematic diagram of a heat insulation door according to an embodiment of the present invention.
Fig. 3 illustrates a layer structural schematic diagram of a door body of the heat insulation door according to an embodiment of the present invention.
Fig. 4 is a local cross-section schematic diagram of the heat insulation door according to an embodiment of the present invention.
Fig. 5 is a local cross-section schematic diagram of the heat insulation door Z according to another embodiment of the present invention.

### DETAILED DESCRIPTION

All the embodiments of the present invention obligatory disclose all the technical features of the independent claim 1.

The foregoing objectives, features and advantages of the present invention will become more apparent from the following detailed description of specific embodiments of the invention in conjunction with the accompanying drawings.

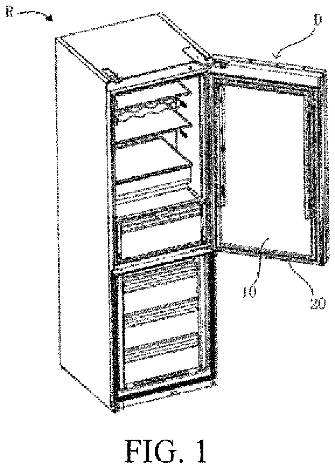

Referring to Fig. 1, the present embodiment provides a refrigeration appliance R and a heat insulation door D according to claim 1 for the refrigeration appliance R. The refrigeration appliance R may be a refrigerator or other electric appliances with a refrigeration space.

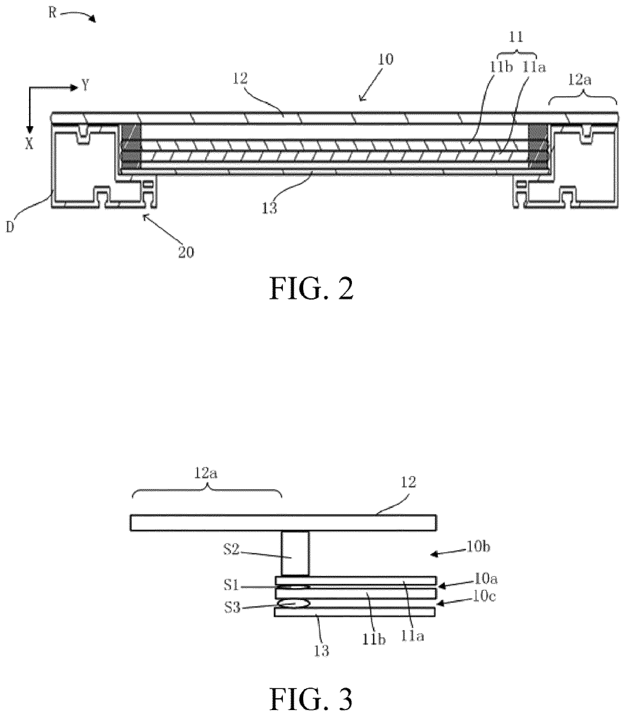

As shown in Fig. 2, Fig. 3 and Fig. 4, the heat insulation door D comprises a door body 10 of a multilayer structure and a doorframe 20. The door body 10 comprises a heat insulation vacuum glass module 11, wherein the vacuum glass module 11 comprises superposed first glass 11a and second glass 11b having a first interval 10a, and the first glass 11a is located in front of the second glass 11b along the front-to-rear direction X of the door. In addition, the door body 10 further comprises a front decoration plate 12 located in front of the vacuum glass module 11 and used for shielding the first glass 11a.

It shall be noted that in the present application, without otherwise specified, the "front-to-rear direction" refers to the front-to-rear direction of the door, i.e. a thickness direction of the door. The "front" is a direction pointing to a front surface of the door, and the "back" is a direction pointing to a back surface of the door. The "inner side" refers to one side, close to the center of the door body, of a plane in which the door body is located, i.e. one side away from the edge of the door.

In a width and/or length direction of the first glass 11A, the front decoration plate 12 is provided with a protruding portion 12a that extends out of the edge of the vacuum glass module 11, and Fig. 2 only shows the protruding portion 12a on one side. The protruding portion 12a can be used for shielding other parts, for example, can be used for partially or completely shielding the doorframe 20. In the present embodiment, along the front-to-rear direction of the door, the protruding portion 12a completely shields the doorframe 20.

The present invention has the advantages that the front decoration plate is disposed in front of the vacuum glass module, the front decoration plate shields the vacuum glass module and extends out of the edge of the vacuum glass module at least along one direction, so that on one hand, the front decoration plate can play a decoration role to improve the appearance attractiveness of the heat insulation door, and can also be used for protecting the glass module to prevent the glass module from being directly exposed to a range that a user can reach, thereby preventing the breaking probability, and also preventing the broken glass module from injuring the user. On the other hand, the protruding portion can be used for shielding a doorframe, so that the doorframe is concealed behind the door, and the attractiveness is better.

The front decoration plate 12 may be a toughened glass plate, a colorful crystal glass plate or a plastic plate, and is preferably the colorful crystal glass plate.

In the door body 10 of a multilayer structure, a sealing portion is disposed between two adjacent layer structures that are spaced so as to form a heat insulation space between two adjacent layer structures. As shown in Fig. 3, a first sealing portion S1 is disposed between an edge of the first glass 11a and an edge of the second glass 11b in the vacuum glass module 11 to enable the first interval 10a to form an enclosed space. Generally speaking, the first sealing portion S1 is in an annular shape surrounding the edge of the vacuum glass module 11.

Meanwhile, there is a second interval 10b between the front decoration plate 12 and the vacuum glass module 11. A second sealing portion S2 is disposed between an edge of the front decoration plate 12 and an edge of the vacuum glass module 11 to enable the second interval 10b to form an enclosed space. The first sealing portion S2 is also basically in an annular shape surrounding the vacuum glass module 11. In comparison to the first interval 10a between the first glass 11a and the second glass 11b in the vacuum glass module 11, the second interval 10b between the front decoration plate 12 and the vacuum glass module 11 can be slightly bigger so as to form a hollow space.

Generally speaking, the second sealing portion S2 is also in an annular shape surrounding the edge of the vacuum glass module 11. It can be seen from Fig. 3 that along the front-to-rear direction of the door, projections of the second sealing portion S2 and the first sealing portion S1 on a same edge are at least partially overlapped.

As shown in Fig. 2 to Fig. 4, the door body 10 further comprises a rear protective layer 13 located behind the second glass 11b along the front-to-rear direction X and used for shielding the second glass 11b. The rear protective layer 13 is used for protecting the vacuum glass module 11 at the back thereof and can be used as a decorative layer on the inner side of the heat insulation door D. The rear protective layer 13 may be a toughened glass layer, a glass layer, or a plastic plate.

The rear protective layer 13 may be disposed at an interval from the vacuum glass module 11 and a third interval 10c is formed. A third sealing portion S3 is disposed between an edge of the rear protective layer 13 and an edge of the vacuum glass module 11 to enable the third interval 10c to form an enclosed space. In general, the third sealing portion S3 is also basically in an annular shape surrounding the vacuum glass module 11.

It shall be noted that in a width and/or length direction of the first glass 11a, i.e. in the length or width direction of the door body 10, the protruding portion 12a of the front decoration plate 12 extends out of the rear protective layer 13. It can be seen from Fig. 2 that the dimension and the shape of the rear protective layer 13 are basically consistent with the dimension and the shape of the vacuum glass module 11 so as to completely shield the vacuum glass module 11.

It shall be noted that the intervals between the front decoration plate 12 and the vacuum glass module 11 and between the rear protection layer 13 and the vacuum glass module 11 may be an air layer or an inert gas layer.

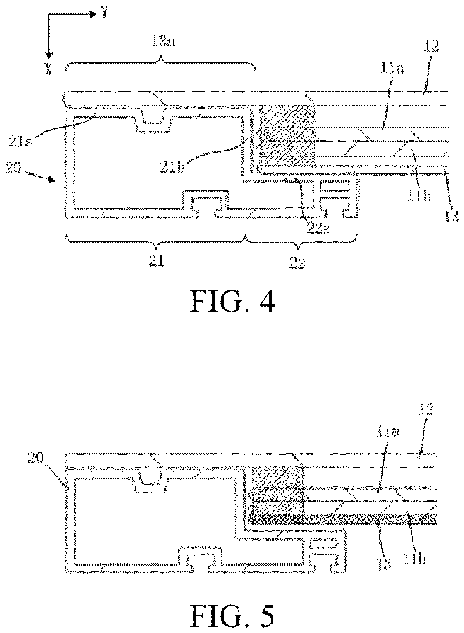

In some other embodiments, as shown in Fig. 5, the rear protective laver 13 mav also be bonded to the vacuum glass module 11. In addition, the rear protective layer 13 may also comprise a protective film that adheres to the second glass 11b, or may be a protective film that adheres to the second glass 11b.

As shown in Fig. 4, the doorframe 20 surrounds the vacuum glass module 11, the doorframe 20 can be divided into a side frame portion 21 and a rear frame portion 22, the side frame portion 21 is located outside a peripheral surface of the vacuum glass module 11, and the rear frame portion 22 is located at the back of the vacuum glass module 11 along the front-to-rear direction X of the door.

The doorframe 20 is internally provided with a first cooperative wall 21a located in front of the rear frame portion 22 and located at the back of the protruding portion 12a, a second cooperative wall 22a facing the back of the vacuum glass module 11, and a connecting wall 21b connecting the first cooperative wall 21a and the second cooperative wall 22a.

Specifically, the first cooperative wall 21a and the connecting wall 21b are disposed on the side frame portion 21, and the second cooperative wall 22a is disposed on the rear frame portion 22. The connecting wall 21b is located on the inner side of the side frame portion 21 and the outer side of the rear frame portion 22 and surrounds a peripheral edge of the vacuum glass module 11. Along the front-to-rear direction X, the vacuum glass module 11 and the rear protective layer 13 are located between the first cooperative wall 21a and the second cooperative wall 22a. The protruding portion 12a is connected to the first cooperative wall 21a, and the vacuum glass module 11 may be directly or indirectly connected to the second cooperative wall 22a. In the present embodiment, the rear frame portion 22 and the door body 10 are bonded by using glue through the second cooperative wall 22a.

The second cooperative wall 22a covers all sealing areas, i.e. the first sealing portion S1, the second sealing portion S2 and the third sealing portion S3 in the door body.

The protection scope of the present invention is defined by the scope of the claims.

## Claims

1. A heat insulation door (D) for a refrigeration appliance (R), comprising a door body (10) having a multilayer structure, wherein the door body (10) comprises:
a heat insulation vacuum glass module (11), wherein the vacuum glass module (11) comprises a superposed first glass (11a) and a second glass (11b), there is a first interval (10a) between the first glass (11a) and the second glass (11b), and the first glass (11a) is located in front of the second glass (11b) along a front-to-rear direction (X) of the door (D), and
a front decoration plate (12), located in front of the vacuum glass module (11) to cover the first glass (11a), wherein
in a width and/or a length direction of the first glass (11a), the front decoration plate (12) has a protruding portion (12a) that extends out of an edge of the vacuum glass module (11), **characterized in that**
the door body (10) further comprises a rear protective layer (13) located behind the second glass (11b) along the front-to-rear direction (X), to cover the second glass (11b).

2. The heat insulation door (D) according to claim 1, **characterized in that** a first sealing portion (S1) is provided between an edge of the first glass (11a) and an edge of the second glass (11b), to enable the first interval (10a) to form an enclosed space.

3. The heat insulation door (D) according to claim 1 or 2, **characterized in that** there is a second interval (10b) between the front decoration plate (12) and the vacuum glass module (11).

4. The heat insulation door (D) according to claim 3, **characterized in that** a second sealing portion (S2) is provided between an edge of front decoration plate (12) and an edge of the vacuum glass module (11), to enable the second interval (10b) to form an enclosed space.

5. The heat insulation door (D) according to one of the preceding claims, **characterized in that** the rear protective layer (13) is a toughened glass plate, a glass plate, or a plastic plate.

6. The heat insulation door (D) according to one of the preceding claims, **characterized in that** the protruding portion (12a) of the front decoration plate (12) extends out of the rear protective layer (13) in the width and/or the length direction of the first glass (11a).

7. The heat insulation door (D) according to one of the preceding claims, **characterized in that** there is a third interval (10c) between the rear protective layer (13) and the vacuum glass module (11).

8. The heat insulation door (D) according to claim 7, **characterized in that** a third sealing portion (S3) is provided between an edge of the rear protective layer (13) and the edge of the vacuum glass module (11), to enable the third interval (10c) to form an enclosed space.

9. The heat insulation door (D) according to one of the preceding claims, **characterized in that** the rear protective layer (13) is bonded to the vacuum glass module (11) and/or that the rear protective layer (13) comprises a protective film that adheres to the second glass (11b).

10. The heat insulation door (D) according to one of the preceding claims, **characterized by** further comprising a door frame (20) surrounding the vacuum glass module (11), wherein the door frame (20) comprises:
a first cooperative wall (21a), located on a rear side of the protruding portion (12a) and connected to the protruding portion (12a);
a second cooperative wall (22a), located behind the first cooperative wall (21a) along the front-to-rear direction (X); and
a connecting wall (21b), connecting the first cooperative wall (21a) and the second cooperative wall (22a), wherein
the vacuum glass module (11) is located between the first cooperative wall (21a) and the second cooperative wall (22a) along the front-to-rear direction (X).

11. The heat insulation door (D) according to claim 10, **characterized in that** the second cooperative wall (22a) is located behind the vacuum glass module (11) along the front-to-rear direction (X), and the vacuum glass module (11) is directly or indirectly connected to the second cooperative wall (22a) and/or that the protruding portion (12a) completely shields the door frame (20) along the front-to-rear direction of the door (D).

12. The heat insulation door (D) according to claim 10 or 11, **characterized in that** the door body (10) is provided with a sealing portion (S1, S2, S3) at edges of two adjacent layer structures having an interval, and projections of sealing portions (S1, S2, S3) to the front-to-rear direction (X) are overlapped with each other.

13. The heat insulation door (D) according to claim 12, **characterized in that** the second cooperative wall (22a) covers the sealing portion (S1, S2, S3).

14. The heat insulation door (D) according to one of the preceding claims, **characterized in that** the front decoration plate (12) is a colorful crystal glass plate.

15. A refrigeration appliance (R), **characterized by** comprising the heat insulation door (D) according to any one of claims 1 to 14.

## Patentansprüche

1. Wärmedämmtür (D) für ein Kältegerät (R), die einen Türhauptteil (10) mit einem mehrschichtigen Aufbau umfasst, wobei der Türhauptteil (10) Folgendes umfasst:
ein wärmedämmendes Vakuumglasmodul (11), wobei das Vakuumglasmodul (11) ein erstes Glas (11a) und ein zweites Glas (11b) umfasst, die übereinanderliegen, zwischen dem ersten Glas (11a) und dem zweiten Glas (11b) ein erster Abstand (10a) besteht und das erste Glas (11a) in einer Vorn-Hinten-Richtung (X) der Tür (D) vor dem zweiten Glas (11b) liegt,
und
eine Dekorfrontplatte (12), die vor dem Vakuumglasmodul (11) liegt und so das erste Glas (11a) abdeckt, wobei die Dekorfrontplatte (12) in einer Breiten- und/oder einer Längenrichtung des ersten Glases (11a) einen vorstehenden Abschnitt (12a) aufweist, der über eine Kante des Vakuumglasmoduls (11) hinausgeht, **dadurch gekennzeichnet, dass**
der Türhauptteil (10) ferner eine hintere Schutzschicht (13) umfasst, die in Vorn-Hinten-Richtung (X) hinter dem zweiten Glas (11b) liegt und so das zweite Glas (11b) abdeckt.

2. Wärmedämmtür (D) nach Anspruch 1, **dadurch gekennzeichnet, dass** zwischen einer Kante des ersten Glases (11a) und einer Kante des zweiten Glases (11b) ein erster Dichtungsabschnitt (S1) vorgesehen ist, so dass der erste Abstand (10a) einen geschlossenen Raum bilden kann.

3. Wärmedämmtür (D) nach Anspruch 1 oder 2, **dadurch gekennzeichnet, dass** zwischen der Dekorfrontplatte (12) und dem Vakuumglasmodul (11) ein zweiter Abstand (10b) besteht.

4. Wärmedämmtür (D) nach Anspruch 3, **dadurch gekennzeichnet, dass** zwischen einer Kante der Dekorfrontplatte (12) und einer Kante des Vakuumglasmoduls (11) ein zweiter Dichtungsabschnitt (S2) vorgesehen ist, so dass der zweite Abstand (10b) einen geschlossenen Raum bilden kann.

5. Wärmedämmtür (D) nach einem der vorhergehenden Ansprüche, **dadurch gekennzeichnet, dass** es sich bei der hinteren Schutzschicht (13) um eine Einscheibensicherheitsglasplatte, eine Glasplatte oder eine Kunststoffplatte handelt.

6. Wärmedämmtür (D) nach einem der vorhergehenden Ansprüche, **dadurch gekennzeichnet, dass** der vorstehende Abschnitt (12a) der Dekorfrontplatte (12) in Breiten-und/oder Längenrichtung des ersten Glases (11a) über die hintere Schutzschicht (13) hinausgeht.

7. Wärmedämmtür (D) nach einem der vorhergehenden Ansprüche, **dadurch gekennzeichnet, dass** zwischen der hinteren Schutzschicht (13) und dem Vakuumglasmodul (11) ein dritter Abstand (10c) besteht.

8. Wärmedämmtür (D) nach Anspruch 7, **dadurch gekennzeichnet, dass** zwischen einer Kante der hinteren Schutzschicht (13) und der Kante des Vakuumglasmoduls (11) ein dritter Dichtungsabschnitt (S3) vorgesehen ist, so dass der dritte Abstand (10c) einen geschlossenen Raum bilden kann.

9. Wärmedämmtür (D) nach einem der vorhergehenden Ansprüche, **dadurch gekennzeichnet, dass** die hintere Schutzschicht (13) mit dem Vakuumglasmodul (11) verklebt ist und/oder eine Schutzfolie umfasst, die an dem zweiten Glas (11b) haftet.

10. Wärmedämmtür (D) nach einem der vorhergehenden Ansprüche, **dadurch gekennzeichnet, dass** sie ferner einen Türrahmen (20) umfasst, der das Vakuumglasmodul (11) umgibt, wobei der Türrahmen (20) Folgendes umfasst:
eine erste Anbindungswand (21a), die an einer Rückseite des vorstehenden Abschnitts (12a) liegt und mit diesem verbunden ist,
eine zweite Anbindungswand (22a), die in Vorn-Hinten-Richtung (X) hinter der ersten Teilwand (21a) liegt, und
eine Verbindungswand (21b), die die erste Anbindungswand (21a) und die Anbindungswand Teilwand (22a) verbindet, wobei
das Vakuumglasmodul (11) in Vorn-Hinten-Richtung (X) zwischen der ersten Anbindungswand (21a) und der zweiten Anbindungswand (22a) liegt.

11. Wärmedämmtür (D) nach Anspruch 10, **dadurch gekennzeichnet, dass** die zweite Anbindungswand (22a) in Vorn-Hinten-Richtung (X) hinter dem Vakuumglasmodul (11) liegt und das Vakuumglasmodul (11) direkt oder indirekt mit der zweiten Anbindungswand (22a) verbunden ist und/oder der vorstehende Abschnitt (12a) den Türrahmen (20) in Vorn-Hinten-Richtung der Tür (D) vollständig schützt.

12. Wärmedämmtür (D) nach Anspruch 10 oder 11, **dadurch gekennzeichnet, dass** der Türhauptteil (10) an Kanten zweier benachbarter Schichtaufbauten, die einen Abstand aufweisen, mit einem Dichtungsabschnitt (S1, S2, S3) versehen ist und sich Vorsprünge von Dichtungsabschnitten (S1, S2, S3) in Vorn-Hinten-Richtung (X) überlappen.

13. Wärmedämmtür (D) nach Anspruch 12, **dadurch gekennzeichnet, dass** die zweite Anbindungswand (22a) den Dichtungsabschnitt (S1, S2, S3) abdeckt.

14. Wärmedämmtür (D) nach einem der vorhergehenden Ansprüche, **dadurch gekennzeichnet, dass** es sich bei der Dekorfrontplatte (12) um eine farbige Kristallglasplatte handelt.

15. Kältegerät (R), **dadurch gekennzeichnet, dass** es die Wärmedämmtür (D) nach einem der Ansprüche 1 bis 14 umfasst.

## Revendications

1. Porte d'isolation thermique (D) pour un appareil frigorifique (R), comprenant un corps de porte (10) ayant une structure multicouche, dans laquelle le corps de porte (10) comprend :
un module de vitrage sous vide d'isolation thermique (11), dans laquelle le module de vitrage sous vide (11) comprend une première vitre superposée (11a) et une deuxième vitre (11b), un premier intervalle (10a) est présent entre la première vitre (11a) et la deuxième vitre (11b), et la première vitre (11a) est située à l'avant de la deuxième vitre (11b) dans une direction avant-arrière (X) de la porte (D), et
une plaque décorative frontale (12) située à l'avant du module de vitrage sous vide (11) pour recouvrir la première vitre (11a),
dans laquelle, dans une direction de largeur et/ou de longueur de la première vitre (11a), la plaque décorative frontale (12) comporte une partie en saillie (12a) qui s'étend à l'écart d'un bord du module de vitrage sous vide (11),
**caractérisée en ce que** le corps de porte (10) comprend en outre une couche de protection arrière (13) située derrière la deuxième vitre (11b) dans la direction avant-arrière (X), pour recouvrir la deuxième vitre (11b).

2. Porte d'isolation thermique (D) selon la revendication 1, **caractérisée en ce qu'**une première partie d'étanchéité (S1) est prévue entre un bord de la première vitre (11a) et un bord de la deuxième vitre (11b), pour permettre au premier intervalle (10a) de former un espace clos.

3. Porte d'isolation thermique (D) selon la revendication 1 ou 2, **caractérisée en ce qu'**il y a un deuxième intervalle (10b) entre la plaque décorative frontale (12) et le module de vitrage sous vide (11).

4. Porte d'isolation thermique (D) selon la revendication 3, **caractérisée en ce qu'**une deuxième partie d'étanchéité (S2) est prévue entre un bord de la plaque décorative frontale (12) et un bord du module de vitrage sous vide (11), pour permettre au deuxième intervalle (10b) de former un espace clos.

5. Porte d'isolation thermique (D) selon l'une des revendications précédentes, **caractérisée en ce que** la couche de protection arrière (13) est une plaque de verre trempé, une plaque de verre ou une plaque de plastique.

6. Porte d'isolation thermique (D) selon l'une des revendications précédentes, **caractérisée en ce que** la partie en saillie (12a) de la plaque décorative frontale (12) s'étend à l'écart de la couche de protection arrière (13) dans le sens de la largeur et/ou de la longueur de la première vitre (11a).

7. Porte d'isolation thermique (D) selon l'une des revendications précédentes, **caractérisée en ce qu'**il y a un troisième intervalle (10c) entre la couche de protection arrière (13) et le module de vitrage sous vide (11).

8. Porte d'isolation thermique (D) selon la revendication 7, **caractérisée en ce qu'**une troisième partie d'étanchéité (S3) est prévue entre un bord de la couche de protection arrière (13) et le bord du module de vitrage sous vide (11) pour permettre au troisième intervalle (10c) de former un espace clos.

9. Porte d'isolation thermique (D) selon l'une des revendications précédentes, **caractérisée en ce que** la couche de protection arrière (13) est collée au module de vitrage sous vide (11) et/ou **en ce que** la couche de protection arrière (13) comprend un film protecteur qui adhère à la deuxième vitre (11b).

10. Porte d'isolation thermique (D) selon l'une des revendications précédentes, **caractérisée en ce qu'**elle comprend en outre un cadre de porte (20) entourant le module de vitrage sous vide (11), dans laquelle le cadre de porte (20) comprend :
une première paroi coopérante (21a) située sur un côté arrière de la partie en saillie (12a) et reliée à la partie en saillie (12a),
une deuxième paroi coopérante (22a), située derrière la première paroi coopérante (21a) dans la direction avant-arrière (X), et
une paroi de connexion (21b) reliant la première paroi coopérante (21a) à la deuxième paroi coopérante (22a),
dans laquelle le module de vitrage sous vide (11) est situé entre la première paroi coopérante (21a) et la deuxième paroi coopérante (22a) dans la direction avant-arrière (X).

11. Porte d'isolation thermique (D) selon la revendication 10, **caractérisée en ce que** la deuxième paroi coopérante (22a) est située derrière le module de vitrage sous vide (11) dans la direction avant-arrière (X), et le module de vitrage sous vide (11) est relié directement ou indirectement à la deuxième paroi coopérante (22a) et/ou **en ce que** la partie en saillie (12a) couvre complètement le cadre de porte (20) dans la direction avant-arrière de la porte (D).

12. Porte d'isolation thermique (D) selon la revendication 10 ou 11, **caractérisée en ce que** le corps de porte (10) est pourvu d'une partie d'étanchéité (S1, S2, S3) à des bords de deux structures en couches adjacentes ménageant un intervalle, et des saillies des parties d'étanchéité (S1, S2, S3) sont superposées l'une par rapport à l'autre dans la direction avant-arrière (X).

13. Porte d'isolation thermique (D) selon la revendication 12, **caractérisée en ce que** la deuxième paroi coopérante (22a) recouvre la partie d'étanchéité (S1, S2, S3).

14. Porte d'isolation thermique (D) selon l'une des revendications précédentes, **caractérisée en ce que** la plaque décorative frontale (12) est une plaque de verre de cristal coloré.

15. Appareil frigorifique (R), **caractérisé en ce qu'**il comprend la porte d'isolation thermique (D) selon l'une quelconque des revendications 1 à 14.
